# EUROPEAN PATENT SPECIFICATION

(11) **EP 3 598 926 B1**
(45) Date of publication and mention of the grant of the patent: **26.10.2022**
(21) Application number: 19182648.6
(22) Date of filing: 26.06.2019
(51) Int. Cl.: A47J 41/00, A47J 41/02

(54) **LIGHTWEIGHT INSULATING BEVERAGE VESSEL**
LEICHT UND ISOLIER-GETRÄNKEBEHÄLTER
RÉCIPIENT DE BOISSON LÉGER ET ISOLANT

(30) Priority: 23.07.2018 EP 18185015; 25.07.2018 EP 18185492
(43) Date of publication of application: 29.01.2020
(73) Proprietor: Riprup Company S.A., GY1 St. Peter Port (GG)
(72) Inventor: Bissen, Monique, 75175 Pforzheim (DE); Schucker, Josef, 6622 Ronco Sopra Ascona (CH)
(74) Representative: Wittmann, Günther

(56) References cited:
- EP-A1- 3 187 621
- GB-A- 2 129 117
- JP-A- H02 261 415
- US-A- 4 138 027
- US-A1- 2018 078 093
- US-A1- 2018 105 346

## Description

The present invention relates to a lightweight insulating beverage vessel.

### Prior art

In the prior art thermos jugs are known. Generally, thermos jugs have an inner flask made of glass and an outer flask made of plastics. Such thermos jugs are sensitive to shocks, since the interior flask may be destroyed, if the thermos chucks falls on a floor. Further, the optical appearance of the outer flask made of plastics is not appealing to all users. Prior art thermos jugs have a undesired high weight.

It is also known to manufacture the interior flask and the outer flask of metal, such as steel. However, tests showed that steel particles will migrate into the beverage. This is undesired from a health perspective and deteriorates taste. Metallic smell is undesired by many users.

EP 3 187 621 A1 discloses a vacuum water bottle including an outer bottle, an inner bottle, and a lip contact part. The first surface layer containing silver sintered under a nitrogen atmosphere or silver oxide sintered under an oxygen atmosphere is formed on a portion or the entirety of the inner wall of the inner bottle, and the second surface layer containing silver sintered under a nitrogen atmosphere or silver oxide sintered under an oxygen atmosphere is formed on a portion or the entirety of the lip contact part.

US 4,138,027 discloses a vacuum bottle construction, in which the vacuum filler is formed from a pair of concentric thin wall metal cylinders. If it is desirable or necessary to provide for resistance to rust, corrosion or the effect of acids in foods on the interior surface of the inner shell, a protective coating of suitable inert materials, such as glass, plastics, inorganic coatings, may be provided as a liner on the interior of the container.

US 2018/0078093 A1 discloses an insulating device including a container that has a first inner wall having a first end having a threaded sidewall and an opening extending into an internal reservoir for receiving liquid, and a second outer wall forming an outer shell of the container. The first inner wall, the second outer wall may be stainless steel or titanium.

US 2018/0105346 A1 discloses an insulating container configured to retain a volume of liquid, and includes a canister having a first inner wall having a first end having an opening extending into an internal reservoir, and a second outer wall forming an outer shell. An inner surface of one or more of the first inner wall or the second outer wall of the container may comprise a silvered surface, copper plated, or covered with thin aluminum foil configured to reduce heat transfer by radiation.

### Summary of the Invention

It is an object of the present invention to provide an improved lightweight beverage vessel, particularly a portable beverage bottle.

The object of the present invention is solved by a beverage vessel according to claim 1.

The invention discloses a beverage bottle for storing beverage having an inner flask and an outer flask and a thermally insulating layer. The inner flask is made of metal forming a base material. The inner flask is adapted to store beverage. The base material of the inner flask may be non-inert metal. The thermally insulating layer is arranged between the inner flask and the outer flask. The beverage vessel comprises an opening for pouring beverage into the beverage vessel or pouring beverage out of the beverage vessel, particularly for pouring the beverage into the inner flask or out of the inner flask. The inner flask is coated in its interior surface with an inert metal coating.

The invention also discloses a beverage vessel lid comprising locking means adapted to engage with complementary looking means of a beverage vessel for releasably locking the lid to the beverage vessel. The beverage vessel lid further comprises a sealing adapted to engage with a sealing surface of the beverage vessel. At least the portion of the lid surrounded by the sealing is covered by an inert metal coating. The locking means and the complementary locking means may be a inner thread and an outer thread, respectively engaging in each other. The lid may be made of metal, such as steel.

The invention also discloses a beverage vessel comprising the lid.

The inert coating prevents that the beverage can diffuse to the metal of the base material of the inner flask or lid and/or that molecules of the inner flask may diffuse into the beverage. Further, the inert metal coating prevents oxidation of the inner flask and the lid. The inert metal coating also prevents that oxides formed in the base material of the inner flask or the lid are entering the beverage. The inert metal coating prevents metallic smell in the vessel or metallic taste of the beverage.

The inert metal coating may have a thickness that prevents metal of the base material of the inner flask or metal of the lid to enter beverage. The inert metal coating is at least on 95% of its surface non-prose, preferably approximately 99% of the surface non-prose, more preferred approximately 99.9% of its surface non-prose. Thereby, a thin layer of inert metal coating is provided that effectively prevents metal or other molecules of the base material of the inner flask or lid to enter the beverage. The thickness of the inert metal coating may be selected such that the surface of the inert metal coating comprises a pore density of less than 100 pores per cm², preferably less than 50 pores per cm², more preferred less than 10 pores per cm², most preferred less than 5 pores per cm².

The inert metal coating may comprise gold, platin, palladium, ruthenium, silver and/or titanium.

The inert metal coating may comprise an alloy comprising gold, platin, palladium, ruthenium, silver and/or titanium. According to the present invention, the alloy comprises hard gold. This gold layer comprises alloy constituents of cobalt and/or copper in order to increase the hardness of the layer. Hard gold is more resistant to abrasion and scratches than fine gold with a hardness of 40-120 HV (HV: Hardness according to Vickers). The hardness of the inertial metal coating and/or hard gold layer may range between approximately 150 HV to 250 HV, and according to the invention is comprised between approximately 120 HV to approximately 360 HV. The hard gold alloy has the advantage that there is not abrasion during use and it can be manufactured by acceptable efforts.

The inert metal coating may comprise a thickness of at least approximately 0.1 µm, preferably at least approximately 0.4 µm, more preferred by at least approximately 0.8 µm. The inert metal coating may comprise a thickness ranging from approximately 0.08 µm to approximately 0.8 µm, preferably from 0.5 µm to approximately 0.6 µm, more preferred from approximately 0.3 µm to approximately 0.8 µm, more preferred from approximately 0.6 µm to approximately 1 µm, most preferred from 0.1 µm to 0.2 µm. Thereby, a reliable sealing of the base material of the inner flask and the lid allowed, such that the beverage cannot pass the inert metal coating and come into contact with the base material of the inner flask.

The base material of the inner flask, the outer flask and/or the lid may be made of steel, particularly stainless steel, V2A steel, V3A steel, V4A steel or V5A steel. Preferably the base material of the inner flask may be manufactured by drawing, particularly the base material of the inner flask may be manufactured by drawing. During drawing the base material may be protected by a plastic layer and thus separated mechanically from the drawing tool. Thereby, a smooth surface of the base material of the inner flask may be achieved. The inert metal coating may be deposited by electogalvanization.

The insulating layer may be a vacuum arranged between the inner flask and the outer flask.

The outer flask and the inner flask may be connected at the upper portion of the beverage vessel, such as by a welding. The beverage vessel may comprise a threat at the outer surface of the upper portion, particularly the outer flask. An outer thread is preferred. In this embodiment the beverage vessel may be a portable bottle.

The top portion of the beverage vessel that is touched by the lips of a user during drinking may be covered by the inert metal coating. Particularly, the outer top portion covered by the inert metal coating may extend at least approximately 5 mm, preferably at least approximately 8 mm, more preferred at least approximately 1 cm, most preferred at least approximately 2 cm from the top of the beverage vessel.

The inert metal coating prevents that the beverage assumes a metal taste or that the beverage vessel adopts the metal smell. The inert metal coating in the lid also avoids that beverage may adopt metal smell. The inert metal coating at the top portion of the beverage vessel avoids that the user of the beverage vessel experiences a metal smell during drinking from the beverage vessel.

Since the inner flask of the beverage vessel is not made of glass, the beverage vessel is light weight and shockproof. Further, inner surface of the inner flask is chemical inert due to the inert metal coating. In a preferred embodiment the vessel is a portable beverage bottle.

### Short description of the drawings

The invention is now described in further detail with reference to the drawing showing an exemplary and non-limiting embodiment of the present invention, wherein
figure 1 shows a sectional view of the beverage vessel according to the present invention; and
figure 2 shows a sectional top view of a lid according to the present invention.

### Detailed description of the drawings

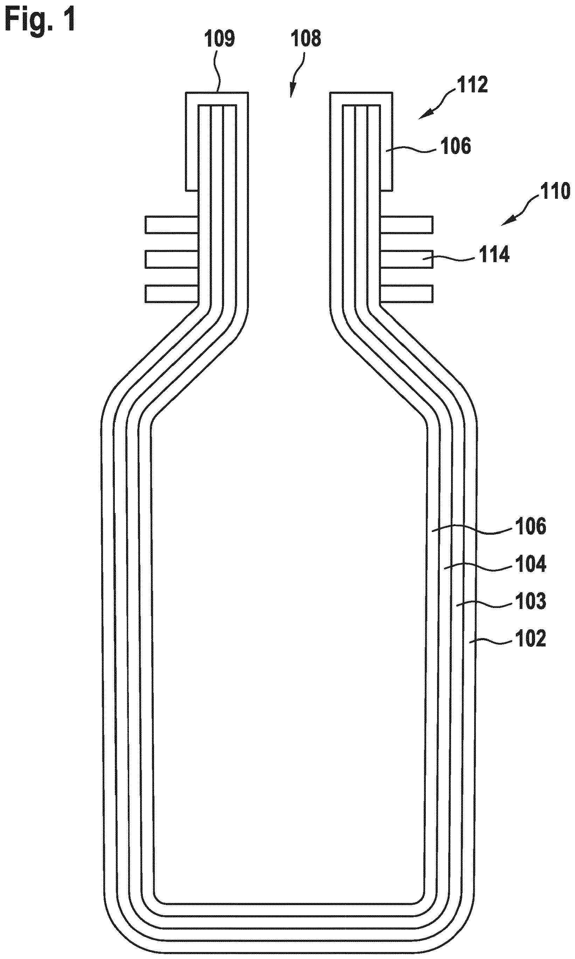

The drawings are merely schematic and provided for understanding the invention. The drawings are not drawn to scale. Figure 1 shows a sectional view of a portable beverage bottle 100 for storing beverage having an inner flask 104 made of (not-inert) metal forming a base material. The inner flask 104 is adapted to store the beverage. The beverage bottle 100 further comprises an outer flask 102. A thermally insulating layer 103 is arranged between the inner flask 104 and the outer flask 102. The thermally insulating layer may be formed by a vacuum. An opening 108 for pouring beverage into the bottle or pouring beverage out of the bottle is arranged at the upper portion 110 of the inner and/or outer flask 102, 104. The inner flask is coated in its interior surface with an inert metal coating 106. The inert metal coating 106 has a thickness that prevents metal of the base material of the inner flask 106 to enter the beverage.

The inert metal coating 106 is preferably non-porous. A pore allows the beverage to contact the (not-inert) base material of the inner flask. The thickness of the inert metal coating is selected such that the surface of the inert metal coating is at least 95 % non-porous, preferably 99 % non-porous, more preferred 99.9 % non-porous.

The thickness of the inert metal coating 106 is selected such that the surface of the inert metal coating comprises a pore density of less than 100 pores per cm², preferably less than 50 pores per cm², more preferred less than 10 pores per cm², most preferred less than 5 pores per cm².

The inert metal coating may comprise gold, platinum, palladium, ruthenium, silver and/or titanium. The inert metal coating may be made of an alloy comprising gold, platinum, palladium, ruthenium, silver and/or titanium.

The inert metal coating may comprise a thickness of at least approximately 0.1 µm to approximately 0.2 µm.

The base material of the inner flask 104 may be made of steel, such as stainless steel, V2A steel, V3A steel, V4A steel or V5A steel. The outer flask 102 may be made of steel, such as stainless steel.

The thermally insulating layer 103 may be vacuum. The outer flask 102 and the inner flask 104 may be connected at its upper portion 110, such as by welding. The beverage bottle 102 may comprise a thread 114 at the outer surface of the upper portion 110.

The inert metal coating 106 prevents not inert metal of the base material of the inner flask from entering the beverage. Thereby, a healthier beverage can be provided to a user. Further, metallic smell of the bottle or metallic taste of beverage is prevented.

The top portion 112 may be coated with the inert metal coating. Particularly, the top portion coated with the inert metal coating extends at least approximately 5 mm, preferably at least approximately 8 mm, more preferred at least approximately 1 cm, most preferred at least approximately 2 cm from the top of the beverage bottle 102. Since the lips of the user do not touch non-inert metal, such as steel, the user does not experience any metal taste on his lips.

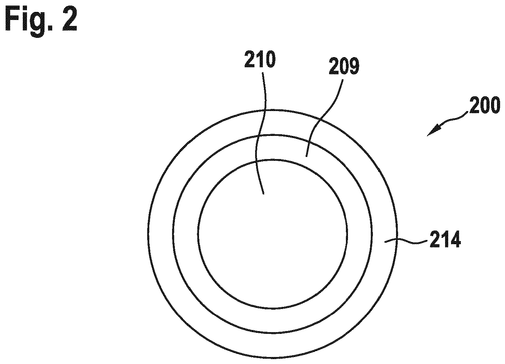

Figure 2 shows a top view of the inner portion of a lid 200. The lid 200 comprises an inner threat 214 adapted to engage with the outer threat 114 arranged at the upper portion 110 of the beverage bottle. The lid 200 comprises a seal 209, preferably a circular seal, fixed to the lid 200. In the portion 210 surrounded by the seal 209 an inert metal coating 210 is arranged. The lid 200 may be manufactured from (non-inert) metal, such as steel, V2A steel, V3A steel, V4A steel or V5A steel. The seal 209 may cooperate with a sealing surface 109 arranged around the opening 108 at the upper portion 110 of the beverage bottle 100. The seal 209 prevents beverage from flowing out of the bottle 100, if the lid 200 is screwed to the bottle 100 by the outer thread 114 formed on the bottle and the inner threat 214 formed on the lid 200.

Since beverage can flow to the portion 210 surrounded by the sealing 209, the portion 210 surrounded by the sealing 209 is covered by the inert metal coating 210, for avoiding contamination of the beverage in the beverage bottle 100 by metal ions, metal molecules, metal oxide molecules or the like.

The present invention achieves a lightweight and thermally insulating bottle that is not sensitive to shocks and avoids that beverage is contaminated by (not inert) metal.

The cost of the inert metal coating is comparably low, since the inert metal coating can be manufactured by galvanic methods.

## Claims

1. A beverage vessel (100) for storing beverage, having
- an inner flask (104) made of metal forming a base material, wherein in the inner flask is adapted to store the beverage;
- an outer flask (102);
- a thermally insulating layer (103) arranged between the inner flask (104) and the outer flask (102); and
- an opening (108) for pouring the beverage into the beverage vessel (100) or pouring the beverage out of the beverage vessel (100);
- wherein the base material of the inner flask (104) is coated in its interior surface with an inert metal coating (106),
**characterized in that** the inert metal coating (106) comprises a hard gold layer having a hardness ranging between approximately 120 HV to approximately 360 HV.

2. The beverage vessel (100) according to claim 1 having a beverage vessel lid (200), the beverage vessel lid (200) comprising
- locking means (214) adapted to engage with complimentary locking means (114) of a beverage vessel (100) for releasably locking the lid (200) to the beverage vessel (100); and
- a sealing (209) adapted to engage with a sealing surface (109) of the beverage vessel (100);
- wherein at least the portion of the lid (200) surrounded by the sealing (209) is covered by an inert metal coating (210), wherein the inert metal (210) coating comprises a hard gold layer having a hardness of between approximately 120 HV to approximately 360 HV.

3. The beverage vessel (100) according to claim 1 or 2, wherein
- the inert metal coating (106, 210) has a thickness that prevents metal of the inner flask (104) or metal of the lid (200) to enter the beverage.

4. The beverage vessel (100) according to any one of claim 1 to 3, wherein the inert metal coating (106, 210) is at least approximately 95 % non-porous, preferably approximately 99 % non-porous, more preferred approximately 99.9 % nonporous.

5. The beverage vessel (100) according to any one of claims 1 to 4, wherein the thickness of the inert metal coating (106, 210) is selected such that the surface of the inert metal coating comprises a pore density of less than 100 pores per cm², preferably less than 50 pores per cm², more preferred less than 10 pores per cm², most preferred less than 5 pores per cm².

6. The beverage vessel (100) according to any one of claims 1 to 5, wherein the hard gold is an alloy comprising gold and at least one of cobalt and copper.

7. The beverage vessel (100) according to any one of claims 1 to 6, wherein the hardness of the hard gold layer (106, 210) may range between approximately 150 HV to 250 HV.

8. The beverage vessel (100) according to any one of claims 1 to 7, wherein the inert metal coating (106, 210) comprises a thickness from approximately 0.08 µm to approximately 0.8 µm, preferably form 0.15 µm to approximately 0.6 µm, more preferred from approximately 0.3 µm to approximately 0.8 µm.

9. The beverage vessel (100) according to any one of claims 1 or 3 to 8, **characterized by** at least one of the following:
- the inner flask (104) is made of steel.
- the outer flask (102) is made of steel.

10. The beverage vessel (100) according to any one of claims 1 or 3 to 9, wherein the insulating layer (103) is a vacuum arranged between the inner flask (104) and the outer flask (102).

11. The beverage vessel (100) according to any one of claims 1 or 3 to 10, wherein the outer flask (102) and the inner flask (104) are connected at the upper portion of the beverage vessel (100).

12. The beverage vessel (100) according to any one of claims 1 or 3 to 11, wherein the beverage vessel (100) comprises a thread (114) at the outer surface at the upper portion (110).

13. The beverage vessel (100) according to any one of claims 1 or 3 to 12, wherein the outer top portion (112) of the beverage vessel (100) that is touched by the lips of a user during drinking is covered by the inert metal coating (106).

## Patentansprüche

1. Getränkegefäß (100) zum Aufbewahren von Getränk, mit
- einem inneren Behälter (104) aus Metall, das ein Grundmaterial bildet, wobei der innere Behälter dazu ausgebildet ist, das Getränk aufzubewahren;
- einen äußeren Behälter (102);
- einer thermisch isolierenden Schicht (103), die zwischen dem inneren Behälter (104) und dem äußeren Behälter (102) angeordnet ist; und
- eine Öffnung (108) zum Eingießen des Getränks in das Getränkegefäß (100) oder zum Ausgießen des Getränks aus dem Getränkegefäß (100);
- wobei das Grundmaterial des Innenbehälter (104) an seiner Innenfläche mit einer inerten Metallbeschichtung (106) beschichtet ist,
**dadurch gekennzeichnet, dass** die inerte Metallbeschichtung (106) eine Hartgoldschicht mit einer Härte im Bereich zwischen etwa 120 HV und etwa 360 HV umfasst.

2. Getränkegefäß (100) nach Anspruch 1 mit einem Getränkegefäßdeckel (200), wobei der Getränkegefäßdeckel (200) umfasst
- Verriegelungsmittel (214), die dazu ausgebildet sind, mit komplementären Verriegelungsmitteln (114) des Getränkegefäßes (100) in Eingriff zu kommen, um den Deckel (200) lösbar am Getränkegefäß (100) zu verriegeln; und
- eine Dichtung (209), die dazu ausgebildet ist, mit einer Dichtfläche (109) des Getränkegefäßes (100) in Eingriff zu kommen;
- wobei zumindest der von der Dichtung (209) umgebene Bereich des Deckels (200) mit einer inerten Metallbeschichtung (210) bedeckt ist, wobei die inerte Metallbeschichtung (210) eine Hartgoldschicht mit einer Härte zwischen etwa 120 HV und etwa 360 HV umfasst.

3. Getränkegefäß (100) nach Anspruch 1 oder 2, wobei
- die inerte Metallbeschichtung (106, 210) eine Dicke aufweist, die das Eindringen von Metall des inneren Behälters (104) oder von Metall des Deckels (200) in das Getränk verhindert.

4. Getränkegefäß (100) nach einem der Ansprüche 1 bis 3, wobei die inerte Metallbeschichtung (106, 210) mindestens zu etwa 95 % porenfrei, vorzugsweise zu etwa 99 % porenfrei und besonders bevorzugt zu etwa 99,9 % porenfrei ist.

5. Getränkegefäß (100) nach einem der Ansprüche 1 bis 4, wobei die Dicke der inerten Metallbeschichtung (106, 210) so gewählt ist, dass die Oberfläche der inerten Metallbeschichtung eine Porendichte von weniger als 100 Poren pro cm², vorzugsweise weniger als 50 Poren pro cm², besonders bevorzugt weniger als 10 Poren pro cm², am meisten bevorzugt weniger als 5 Poren pro cm² aufweist.

6. Getränkegefäß (100) nach einem der Ansprüche 1 bis 5, wobei das Hartgold eine Legierung ist, die Gold und mindestens eines von Kobalt und Kupfer umfasst.

7. Getränkegefäß (100) nach einem der Ansprüche 1 bis 6, wobei die Härte der Hartgoldschicht (106, 210) zwischen etwa 150 HV und 250 HV liegen kann.

8. Getränkegefäß (100) nach einem der Ansprüche 1 bis 7, wobei die inerte Metallbeschichtung (106, 210) eine Dicke von etwa 0,08 µm bis etwa 0,8 µm, vorzugsweise von 0,15 µm bis etwa 0,6 µm, besonders bevorzugt von etwa 0,3 µm bis etwa 0,8 µm aufweist.

9. Getränkegefäß (100) nach einem der Ansprüche 1 oder 3 bis 8,
**gekennzeichnet durch** mindestens einen der folgenden Punkte:
- der innere Behälter (104) aus Stahl hergestellt ist.
- der äußere Behälter (102) aus Stahl hergestellt ist.

10. Getränkegefäß (100) nach einem der Ansprüche 1 oder 3 bis 9, wobei die Isolierschicht (103) ein Vakuum ist, das zwischen dem inneren Behälter (104) und dem äußeren Behälter (102) angeordnet ist.

11. Getränkegefäß (100) nach einem der Ansprüche 1 oder 3 bis 10, wobei der äußere Behälter (102) und der innere Behälter (104) am oberen Bereich des Getränkegefäßes (100) verbunden sind.

12. Getränkegefäß (100) nach einem der Ansprüche 1 oder 3 bis 11, wobei das Getränkegefäß (100) ein Gewinde (114) an der Außenfläche am oberen Bereich (110) aufweist.

13. Getränkegefäß (100) nach einem der Ansprüche 1 oder 3 bis 12, wobei der äußere obere Bereich (112) des Getränkegefäßes (100), der beim Trinken von den Lippen eines Benutzers berührt wird, von der inerten Metallbeschichtung (106) bedeckt ist.

## Revendications

1. Récipient de boisson (100) pour stocker une boisson, comportant :
- un flacon interne (104) qui est réalisé en un métal qui forme un matériau de base, dans lequel, à l'intérieur du flacon interne, sont adaptés pour stocker la boisson :
- un flacon externe (102) ;
- une couche thermiquement isolante (103) qui est agencée entre le flacon interne (104) et le flacon externe (102) ; et
- une ouverture (108) pour verser la boisson à l'intérieur du récipient de boisson (100) ou pour verser la boisson hors du récipient de boisson (100) ;
- dans lequel le matériau de base du flacon interne (104) est revêtu sur sa surface intérieure d'un revêtement en un métal inerte (106) ;
**caractérisé en ce que** le revêtement en un métal inerte (106) comprend une couche en un or dur qui présente une dureté qui s'inscrit à l'intérieur d'une plage entre approximativement 120 HV et approximativement 360 HV.

2. Récipient de boisson (100) selon la revendication 1, comportant un couvercle de récipient de boisson (200), le couvercle de récipient de boisson (200) comprenant :
- un moyen de blocage (214) qui est adapté pour être engagé avec un moyen de blocage complémentaire (114) d'un récipient de boisson (100) pour bloquer de façon libérable le couvercle (200) sur le récipient de boisson (100) ; et
- un moyen d'étanchéité (209) qui est adapté pour être engagé avec une surface d'étanchéité (109) du récipient de boisson (100) ;
- dans lequel au moins la partie du couvercle (200) qui est entourée par le moyen d'étanchéité (209) est recouverte par un revêtement en un métal inerte (210), dans lequel le revêtement en un métal inerte (210) comprend une couche en un or dur qui présente une dureté entre approximativement 120 HV et approximativement 360 HV.

3. Récipient de boisson (100) selon la revendication 1 ou 2, dans lequel :
- le revêtement en un métal inerte (106, 210) présente une épaisseur qui empêche que du métal du flacon interne (104) ou du métal du couvercle (200) ne pénètre dans la boisson.

4. Récipient de boisson (100) selon l'une quelconque des revendications 1 à 3, dans lequel le revêtement en un métal inerte (106, 210) est au moins à approximativement 95 % non poreux, de préférence à approximativement 99 % non poreux, de façon davantage préférable à approximativement 99,9 % non poreux.

5. Récipient de boisson (100) selon l'une quelconque des revendications 1 à 4, dans lequel l'épaisseur du revêtement en un métal inerte (106, 210) est sélectionnée de telle sorte que la surface du revêtement en un métal inerte présente une densité de pores inférieure à 100 pores par cm², de préférence inférieure à 50 pores par cm², de façon davantage préférable inférieure à 10 pores par cm², et de la façon la plus préférable inférieure à 5 pores par cm².

6. Récipient de boisson (100) selon l'une quelconque des revendications 1 à 5, dans lequel l'or dur est un alliage qui comprend de l'or et au moins un composant pris parmi le cobalt et le cuivre.

7. Récipient de boisson (100) selon l'une quelconque des revendications 1 à 6, dans lequel la dureté de la couche en un or dur (106, 210) peut s'inscrire à l'intérieur d'une plage entre approximativement 150 HV et 250 HV.

8. Récipient de boisson (100) selon l'une quelconque des revendications 1 à 7, dans lequel le revêtement en un métal inerte (106, 210) présente une épaisseur qui va d'approximativement 0,08 µm à approximativement 0,8 µm, de préférence de 0,15 µm à approximativement 0,6 µm, de façon davantage préférable d'approximativement 0,3 µm à approximativement 0,8 µm.

9. Récipient de boisson (100) selon l'une quelconque des revendications 1 ou 3 à 8, **caractérisé par** au moins l'une des caractéristiques qui suivent :
- le flacon interne (104) est réalisé en acier ; et
- le flacon externe (102) est réalisé en acier.

10. Récipient de boisson (100) selon l'une quelconque des revendications 1 ou 3 à 9, dans lequel la couche thermiquement isolante (103) est un vide qui est agencé entre le flacon interne (104) et le flacon externe (102).

11. Récipient de boisson (100) selon l'une quelconque des revendications 1 ou 3 à 10, dans lequel le flacon externe (102) et le flacon interne (104) sont connectés au niveau de la partie supérieure du récipient de boisson (100).

12. Récipient de boisson (100) selon l'une quelconque des revendications 1 ou 3 à 11, dans lequel le récipient de boisson (100) comprend un filetage (114) au niveau de la surface externe au niveau de la partie supérieure (110).

13. Récipient de boisson (100) selon l'une quelconque des revendications 1 ou 3 à 12, dans lequel la partie de sommet externe (112) du récipient de boisson (100) qui entre en contact avec les lèvres d'un utilisateur tandis que celui-ci est en train de boire est recouverte par le revêtement en un métal inerte (106).
